Europäisches Patentamt

European Patent Office

Office européen des brevets

(11) Numéro de publication: **0 023 877**
A1

# DEMANDE DE BREVET EUROPEEN

(21) Numéro de dépôt: **80420098.8**

(22) Date de dépôt: **31.07.80**

(51) Int. Cl.³: **B 29 D 23/05,** B 29 D 23/00, B 29 F 3/00

(30) Priorité: **03.08.79 FR 7920344**

(71) Demandeur: **SEPEREF-TMP SOCIETE POUR L'EQUIPEMENT DES RESEAUX EN CANALISATIONS DE MATIERES PLASTIQUES, Quincieux, F-69650 Saint-Germain-au-Mont-d'Or (FR)**

(43) Date de publication de la demande: **11.02.81 Bulletin 81/6**

(72) Inventeur: **Prudhomme, Pierre, Chasselay, F-69380 Lozanne (FR)**

(84) Etats contractants désignés: **AT BE CH DE GB IT LI NL SE**

(74) Mandataire: **Laurent, Michel et al, 39, rue Boileau, F-69006 Lyon (FR)**

(54) **Procédé et dispositif pour la réalisation en continu de structures tubulaires.**

(57) Procédé pour la réalisation en continue, sans arrêt ni temps mort, d'un tube à base de résine thermodurcissable renforcée par une structure textile.

Le procédé selon l'invention se caractérise par le fait:
— que la couche de résine est disposée sur un mandrin (2) au moyen d'éléments longitudinaux (3) répartis régulièrement à la périphérie dudit mandrin (2),
— que l'on dépose hélicoïdalement autour desdits éléments longitudinaux (3) supportant la résine, avant qu'ils ne quittent le mandrin (2), au moins une couche (6), (8), (9) de matière textile préimprégnée d'une résine similaire à la précédente,
— et que l'on soumet la surface interne du tube formé à un traitement d'irradiation (7) provoquant un durcissement pratiquement instantané, dès, la sortie du mandrin (2), d'au moins une partie de l'épaisseur de la couche de résine.
Application: fabrication d'élements tubulaires divers.

PROCEDE ET DISPOSITIF POUR LA REALISATION EN CONTINU DE STRUCTURES TUBULAIRES.

La présente invention concerne un nouveau procédé, ainsi qu'un dispositif pour sa mise en oeuvre, pour la fabrication en continu de structures tubulaires à base de matière plastique thermodurcissable renforcée par une structure textile noyée dans ladite matière.

Elle a trait plus particulièrement à un procédé perfectionné pour la réalisation de structures tubulaires à base de matière thermodurcissable, de type polyester ou acrylique, matière qui sera désignée par l'expression "résine thermodurcissable" dans la suite de la description.

Par ailleurs, l'invention sera décrite plus particulièrement pour la réalisation de structures tubulaires dont la section transversale est circulaire, mais il est évident que cela n'est pas limitatif et qu'elle peut également être appliquée pour réaliser des structures tubulaires de sections différentes, par exemple qui présentent une section interne de forme polygonale.

Par mesure de simplification, ces structures tubulaires seront désignées par l'expression "tubes".

Les matériaux textiles de renforcement pour la réalisation de tubes conformes à l'invention, peuvent être de tout type compatible avec la nature de la résine utilisée, par exemple à base de verre, de polyester, de carbone... Ils peuvent se présenter soit sous la forme de fils, de mèches, de câbles, de nappes tissées, tressées, non tissées...

Diverses techniques sont utilisées de nos jours pour réaliser des tubes en matière plastique, renforcés ou non par une structure textile.

Ainsi, il a été proposé de réaliser des tubes par extrusion d'une composition de polychlorure de vinyle (PVC) au moyen d'une extrudeuse conventionnelle, par exemple une extrudeuse à double vis. Selon cette technique,la vis est chauffée de manière connue à une température comprise entre 150 et 200° C, et de préférence entre 170 et 185° C.

En tête d'extrusion, qui est chauffée à environ 200° C, on conforme cette composition sous la forme d'un tube que l'on extrude dans l'eau à une température voisine de 7 à 8 ° C. On tire sur ce tube mécaniquement, puis on le découpe en tronçons élémentaires de longueur déterminée. Toutes ces opérations s'effectuent en continu.

Cette technique permet d'obtenir des tubes de longueur quelconque, mais ceux-ci présentent une faible résistance à l'écraseement, aux contraintes internes, et à la torsion.

En conséquence, lorsqu'on désire réaliser des tubes présentant de bonnes propriétés mécaniques, on recouvre le tube en PVC ainsi formé, de différentes couches de matière textile imprégnée de résine, par exemple de fils ou mèches de verre préimprégnés de résine acrylique ou polyester. Ces couches sont disposées soit longitudinalement, soit hélicoïdalement autour du tube, les couches hélicoïdales pouvant former avec l'axe longitudinal, un angle variable en fonction des caractéristiques mécaniques et étant enroulées éventuellement en sens inverse les unes des autres.

Pour obtenir une bonne liaison des différentes couches entre elles, et principalement de celle de la couche interne en PVC préalablement formée avec les couches textiles de renforcement, il est nécessaire de traiter la surface du tube en PVC et d'y déposer une couche d'agent d'adhérisation. La polymérisation de la résine est obtenue ensuite par chauffage.

Cette manière de procéder est donc relativement complexe.

Une autre technique bien connue pour la réalisation d'un tube en résine thermodurcissable renforcée de matière textile, consiste à former une succession de couches textiles, imprégnées préalablement ou non de résine, autour d'un mandrin support.

L'ensemble ainsi réalisé est ensuite traité thermiquement pour provoquer la polymérisation de la résine, ce traitement étant effectué de préférence dans un four

- 3 -    0023877

indépendant. Après traitement thermique, le mandrin est élevé.

Cette technique présente de nombreux inconvénients. En effet, elle ne permet pas d'obtenir des tubes de grande longueur et surtout elle exige un parc important de mandrins supports, donc de gros investissements. Par ailleurs, l'enlèvement des mandrins après formation du tube, est délicat à réaliser et nécessite de nombreuses précautions. Notamment, il est nécessaire de traiter la surface du mandrin préalablement à l'enroulement des différentes couches de matière.

D'autres procédés ont été également proposés pour réaliser des tubes à base de matière plastique renforcée ou non par des éléments fibreux.

Ainsi, le brevet français publié sous le nº 2 206 182 décrit un procédé de moulage continu par extrusion d'une résine thermodurcissable renforcée par des fibres, pouvant éventuellement comporter des renforts longitudinaux constitués de mèches de fils de verre ("stratifils" ou "rovings") imprégnés de résine et introduits dans le dispositif d'extrusion de manière à se trouver noyés dans l'épaisseur du tube formé. Afin d'obtenir un durcissement de la matière, l'appareil comporte une zone isolée thermiquement destinée à empêcher la transmission de chaleur dégagée par la réaction de durcissement de la matière de moulage vers une zone d'entrée de la filière.Le traitement thermique permettant le durcissement de la résine peut, dans le cas de la réalisation d'un tube, résulter de la combinaison d'un chauffage interne et d'un chauffage externe du tube formé.

Un tel procédé présente cependant de nombreux inconvénients à savoir qu'il est relativement complexe et ne permet pas de réaliser des renforts hélicoïdaux par le fait que la matière est complètement polymérisée en sortie du dispositif. De plus, il implique l'utilisation de matières premières à faible durée de conservation (présence de catalyseurs).

Le brevet suisse 578 415 décrit également un procédé et un appareil pour la fabrication de tubes renforcés qui, d'une manière générale, consiste à durcir au moins partiellement une résine thermodurcissable, puis à déposer par enroulement des fils de renforts.

Selon ce procédé, le traitement thermique permettant le durcissement de la résine est réalisé depuis l'extérieur. Cette manière de faire présente comme inconvénient majeur de conduire à des tubes pouvant présenter des déformations internes.

Enfin, il a été proposé dans le brevet français n° 1 277 683 un procédé permettant de réaliser des tubes en matière plastique, plus particulièrement à base de polyéthylène, par extrusion de la matière autour d'un mandrin. Le durcissement du tube extrudé est obtenu par passage sur un mandrin refroidi par circulation d'eau et, afin notamment d'améliorer la résistance à la traction du tube formé, et d'empêcher une réutilisation de la matière en rendant impossible une nouvelle fusion, le tube est alors soumis, immédiatement à sa sortie du mandrin refroidi, à un traitement d'irradiation interne au moyen d'un rayonnement ultraviolet provoquant la réticulation du polyéthylène. Les tubes obtenus par cette technique ne peuvent cependant pas être renforcés par des structures fibreuses tant longitudinales qu'hélicoïdales intégrées à la résine. De plus, ce traitement nécessite une intensité de rayonnement très importante pour provoquer la réticulation de la matière.

Or on a trouvé, et c'est ce qui fait l'objet de la présente invention, un procédé simple, économique, efficace qui surmonte les inconvénients des procédés antérieurs et permet notamment de réaliser en continu, sans arrêt, ni temps mort, un tube à base de résine thermodurcissable renforcée par une structure textile, ce tube pouvant soit être découpé en tronçons de longueur déterminée, soit au contraire se présenter sous la forme d'un élément continu de longueur pratiquement illimitée.

L'invention concerne également un dispositif perfectionné pour la mise en oeuvre dudit procédé.

0023877

D'une manière générale, le procédé selon l'invention consiste :

- à déposer sur un mandrin conformateur une couche de résine,

- à faire avancer ladite résine vers l'extrémité libre du mandrin,

- puis à soumettre la surface interne du tube formé à un traitement d'irradiation immédiatement à proximité de l'extrémité du mandrin,

et il se caractérise par le fait :

- que la couche de résine est déposée sur le mandrin au moyen d'éléments longitudinaux répartis régulièrement à la périphérie dudit mandrin,

- que l'on dépose hélicoïdalement autour desdits éléments longitudinaux supportant la résine, avant qu'ils ne quittent le mandrin, au moins une couche de matière textile préimprégnée d'une résine similaire à la précédente,

- et que le traitement d'irradiation provoque un durcissement pratiquement instantané dès la sortie du mandrin d'au moins une partie de l'épaisseur de la couche de résine.

Le traitement d'irradiation permettant la mise en oeuvre de l'invention peut être réalisé d'une manière comparable à celui décrit dans le brevet français 1 277 683, c'est-à-dire en prévoyant une lampe à rayonnement ultra-violet à l'extrémité du mandrin. Cependant pour obtenir un durcissement de la résine ce traitement devra être réalisé en utilisant une lampe ayant une puissance de préférence égale à au moins 20 watts par centimètre de longueur de lampe, ce qui équivaut à une intensité de l'ordre de deux watts par centimètre carré de surface traitée.

De plus, il est évident que la résine comportera des sensibilisateurs permettant sa polymérisation et son durcissement sous l'action de rayonnements ultra-violets.

Grâce au procédé selon l'invention on obtient pratiquement instantanément, dès la sortie du mandrin, une couche rigide qui peut servir de support à différentes couches de renforcement que l'on peut adjoindre directement en continu.

Comme éléments longitudinaux permettant le dépôt de la résine à la périphérie du mandrin, on peut utiliser des fils préalablement préimprégnés de résine.

Dans une variante du procédé selon l'invention, la résine peut être déposée au moyen d'une extrudeuse classique, les éléments longitudinaux étant amenés à la périphérie du mandrin au travers de l'extrudeuse et le dépôt de la résine se faisant sur ces éléments. Dans ce cas, on utilisera avantageusement comme éléments longitudinaux, des bandes d'un film perméable aux radiations ultra-violettes, ces bandes recouvrant le mandrin et formant une gaine autour de lui. Comme film, on peut utiliser par exemple un film à base de polytérephtalate d'éthylène glycol linéaire.

Comme matière textile préimprégnée de résine déposée hélicoïdalement autour du mandrin, à proximité de son extrémité, on utilisera des fils ou mèches à base de tout matériau compatible avec ladite résine, par exemple à base de verre, de polyester, de carbone... Si une seule couche peut suffire, il est cependant avantageux de déposer au moins deux couches enroulées en sens inverse.

Etant donné que le rayonnement interne auquel est soumis le tube formé à l'extrémité du mandrin provoque le durcissement d'au moins une partie de l'épaisseur de la couche de résine, il est possible, en continu, de déposer sur le tube des couches de renfort complémentaires, par exemple des bandelettes de film enroulées en hélice et/ou des fils préimprégnés et/ou des bandes préimprégnées ou non, de matière textile, telle que non tissé, tissu...

Par ailleurs, conformément à l'invention, l'avance du tube réalisé, est obtenue par tirage, ce qui présente comme avantage de pouvoir faire éventuellement varier facilement la vitesse de production du tube, ce qui permet de réaliser des tubes ayant une structure, et par suite des propriétés, variables sur leur longueur, par exemple, des tubes comportant des portions denses suivies de portions

- 7 -

0023877

présentant des orifices.

Enfin, il est possible dans une variante du procédé selon l'invention de réaliser aisément des variations de diamètre dans le tube, de façon périodique sur sa longueur, variations qui sont couramment désignées par l'expression "tulipe" et qui permettent lorsque le tube est découpé en tronçons, pour faciliter son stockage et son transport, de réunir ultérieurement par simple emmanchement les deux sections ainsi formées. De telles tulipes sont obtenues de manière simple en prévoyant à l'extrémité du mandrin un coulisseau mobile périodiquement sur lequel la résine est déposée.

Un dispositif qui convient particulièrement bien pour la mise en oeuvre du procédé selon l'invention est constitué essentiellement par un bâti support fixe sur lequel est monté horizontalement, de manière fixe, un mandrin conformateur lisse dont la section transversale correspond à la section interne du tube à réaliser, de faible longueur et auquel sont associés :

- des moyens permettant de répartir régulièrement à la périphérie du mandrin une pluralité d'éléments longitudinaux supportant une résine thermodurcissable,

- des moyens permettant de déposer hélicoïdalement autour desdits éléments longitudinaux, avant qu'ils ne quittent le mandrin, au moins une couche de matière textile préimprégnée de résine,

- des moyens de traitement interne par irradiation disposés sensiblement selon l'axe dudit mandrin et provoquant le durcissement pratiquement instantané de la résine à partir de sa surface interne et ce sur au moins une partie de son épaisseur.

Par ailleurs, l'installation peut également comporter des moyens annexes permettant de déposer des couches de renforcement complémentaires (film, bande, matière textile, film préimprégné...), ainsi que des moyens permettant de tracter le tube ainsi formé.

De manière connue, le traitement interne d'irradiation est réalisé au moyen d'une lampe à rayonnement ultra-violet, fixée à l'extrémité du mandrin et disposée sensiblement suivant son axe longitudinal.

De plus, l'extrémité du mandrin peut être prolongée par une partie légèrement compressible, disposée autour de la lampe à rayonnement ultra-violet et réalisée de manière à permettre une irradiation totale de la surface interne du tube formé.

Le dispositif selon l'invention peut, dans le cas où les éléments longitudinaux n'ont pas été préalablement préimprégnés de résine, être associé à une extrudeuse conventionnelle permettant de déposer une couche de résine sur les éléments longitudinaux.

L'invention et les avantages qu'elle apporte seront cependant mieux compris grâce aux exemples de réalisation donnés ci-après qui sont illustrés par les figures annexées dans lesquelles :

- la figure 1 illustre schématiquement en perspective une installation réalisée conformément à l'invention,

- la figure 2 illustre schématiquement, en vue de côté et en coupe, le mandrin conformateur sur lequel est déposée la résine thermodurcissable,

- la figure 3 illustre une variante, également en vue de côté, dans laquelle le tube est réalisé à partir d'éléments longitudinaux préalablement préimprégnés de résine,

- les figures 4 et 5 illustrent schématiquement la manière dont on peut réaliser une tulipe sur une installation conforme à la figure 3.

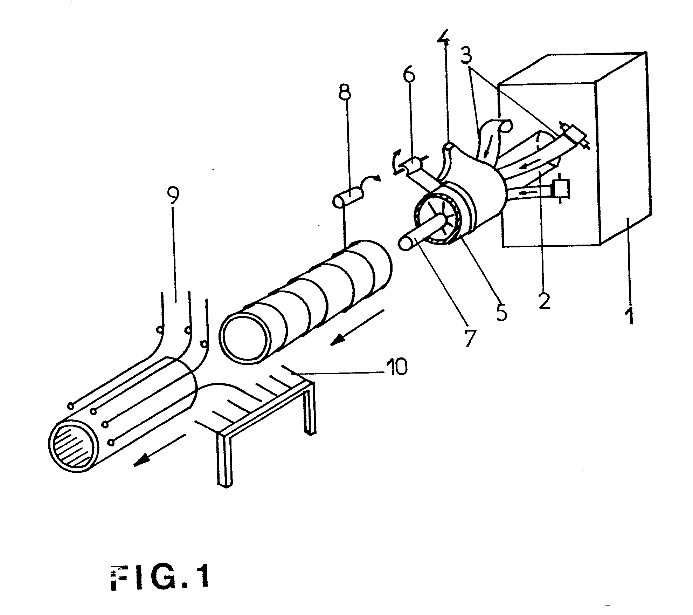

Dans l'exemple de réalisation illustré par la figure 1, une installation conforme à l'invention, comporte essentiellement un bâti 1 fixe, qui supporte un mandrin conformateur 2, réalisé par exemple en acier et monté en porte-à-faux, horizontalement sur ledit bâti 1. Ce mandrin 2 est associé à des moyens permettant d'amener à sa périphérie des éléments longitudinaux destinés à supporter la résine. Dans cet exemple, ces éléments longitudinaux sont constitués par des bandelettes 3 d'un film, perméable aux rayonnements ultra-violets, et la résine est déposée sur ces bandelettes au moyen d'une extrudeuse conventionnelle 4 entourant ledit mandrin 2. En aval de l'extrudeuse 4 et à proximité de l'extrémité 5 du mandrin, est disposé un ensemble 6 permettant de déposer hélicoïdalement autour de la résine une couche de matière textile préimprégnée d'une résine similaire à la résine issue de l'extrudeuse, par exemple un film ou éventuellement une bande de matière non tissée.

Le mandrin 2 supporte à son extrémité, une lampe 7 à rayonnement ultra-violet permettant d'irradier la surface interne du tube formé et de provoquer un durcissement pratiquement instantané dès la sortie du mandrin d'au moins une partie de l'épaisseur de la couche de résine.

L'installation comporte également des moyens conventionnels permettant de déposer des éléments de renfort textile, soit de manière hélicoïdale (éléments 8) autour du tube formé, soit parallèlement (éléments 9) à l'axe du tube. Elle comporte également des moyens 10 permettant de supporter le tube lors de sa progression, par exemple un tapis transporteur à rouleaux, ainsi que des moyens classiques d'appel et de traitement thermique non représentés.

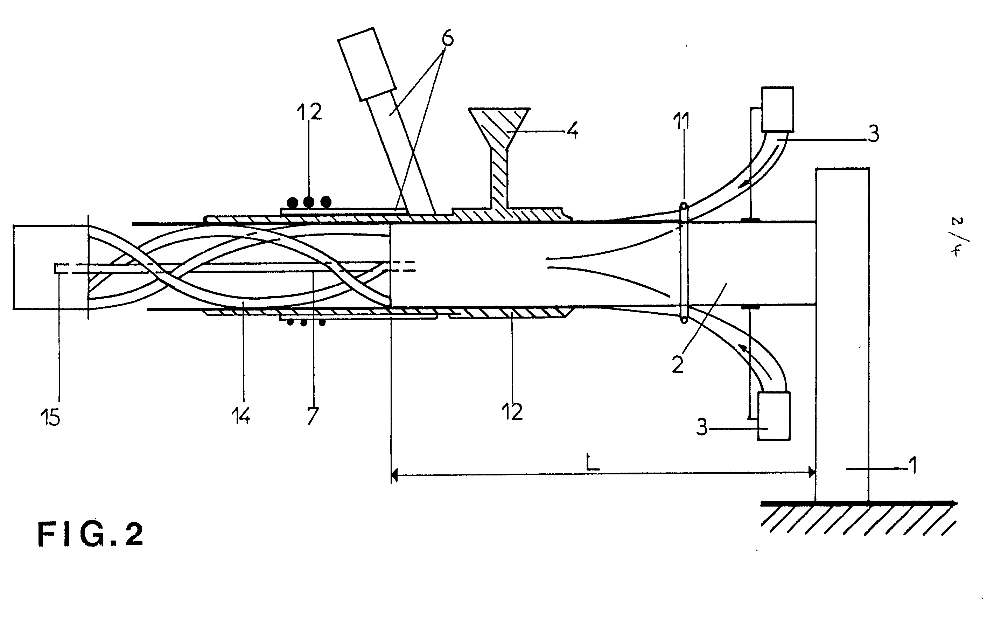

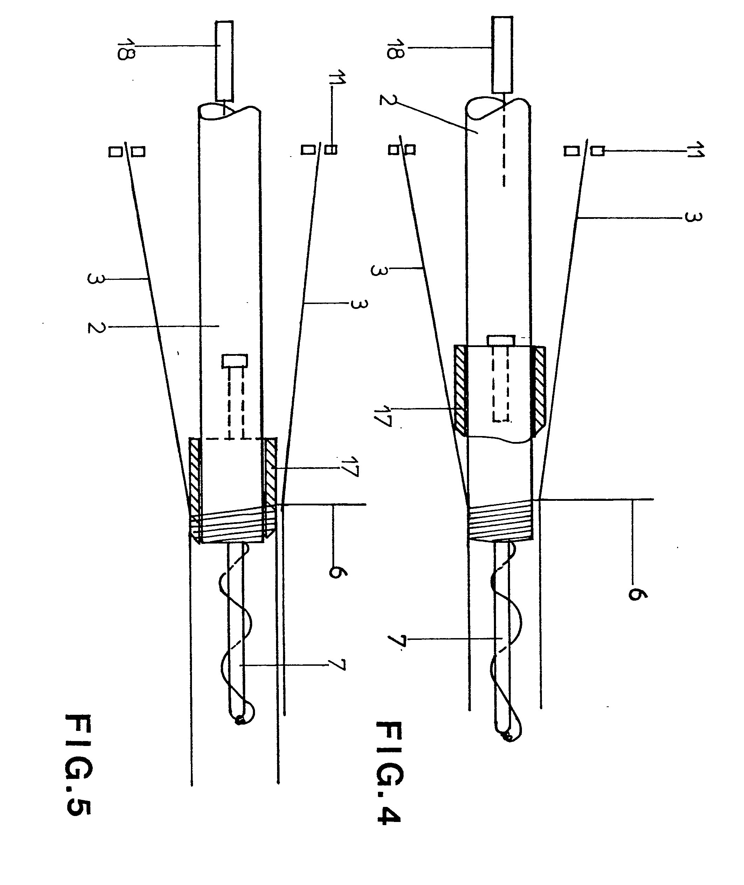

La figure 2 illustre plus en détail la réalisation d'un mandrin conformateur de l'installation illustrée par la figure 1.

Ainsi qu'on peut le voir sur cette figure, les éléments longitudinaux, constitués dans le cas présent par des bandelettes de film 3, sont répartis sur la périphérie du mandrin 2. Un répartiteur 11 permet de disposer ces bandelettes régulièrement de manière à former une gaine autour du mandrin 2. Cette gaine étant réalisée, elle passe à l'intérieur d'une extrudeuse 4 qui dépose sur sa surface une couche régulière 12 de résine thermodurcissable. Avant que le tube ne quitte le mandrin, il est entouré par au moins une couche de matière textile préimprégnée de résine constituée soit par une bande 6 d'un matériau tel qu'un non tissé, un film ou autres matières similaires, soit de fils 13, soit de ces deux éléments. Eventuellement, on pourrait entourer le tube à l'aide d'une bande d'un film 6 non préimprégné de résine avant le dépôt du fil 13 (ou matériau similaire) préimprégné quant à lui de résine.

Le mandrin 2 présente à son extrémité libre dans le prolongement de son axe, une source de radiation interne, constituée par exemple par une lampe à rayonnement ultra-violet 7. Dans ce mode de réalisation, le mandrin 2 est également prolongé dans la zone qui entoure la lampe 7 par une partie 14 présentant la caractéristique d'être légèrement compressible et qui favorise le maintien et le guidage du tube lors de son avance dans la zone où la couche de matière durcie est relativement peu importante.

Cette zone compressible peut être constituée, comme cela est représenté sur cette figure 2, par des éléments en forme de lames, disposés en hélice, de telle manière que le rayonnement émis par la lampe 7 agisse bien sur toute la surface interne du tube formé. Ce mode de réalisation permet également de bien maintenir la lampe 7 à son extrémité 15. Cette lampe 7 est escamotable dans 2.

Le fonctionnement de l'installation est le suivant. Par l'intermédiaire de l'extrudeuse 4, on dépose sur les éléments longitudinaux 3 formant gaine autour du mandrin 2, une couche de résine thermodurcissable et l'on entoure l'ensemble formé à l'aide d'au moins une couche de matière textile (13) préimprégnée de résine. Comme dit précédemment avant le dépôt de cette couche de matière préimprégnée de résine, on peut éventuellement déposer une bande d'un film, d'un non tissé ou de tout autre matériau préimprégné ou non de résine. Lorsque l'ensemble atteint l'extrémité du mandrin 2, sa surface interne se trouve soumise à l'action des rayonnements ultra-violets émis par la lampe 7, ce qui provoque le durcissement pratiquement instantané de l'ensemble résine/éléments longitudinaux 3 au moins sur une faible partie de son épaisseur.

De cette manière, la partie interne du tube étant durcie, il est possible de déposer autour de celui-ci, de manière conventionnelle, des couches de renfort avantageusement préalablement préimprégnéses de résine, sans avoir à utiliser d'autre élément support interne.

Par ailleurs, on a constaté que l'adhérence des différentes couches entre elles se trouvait améliorée par rapport aux techniques antérieures.

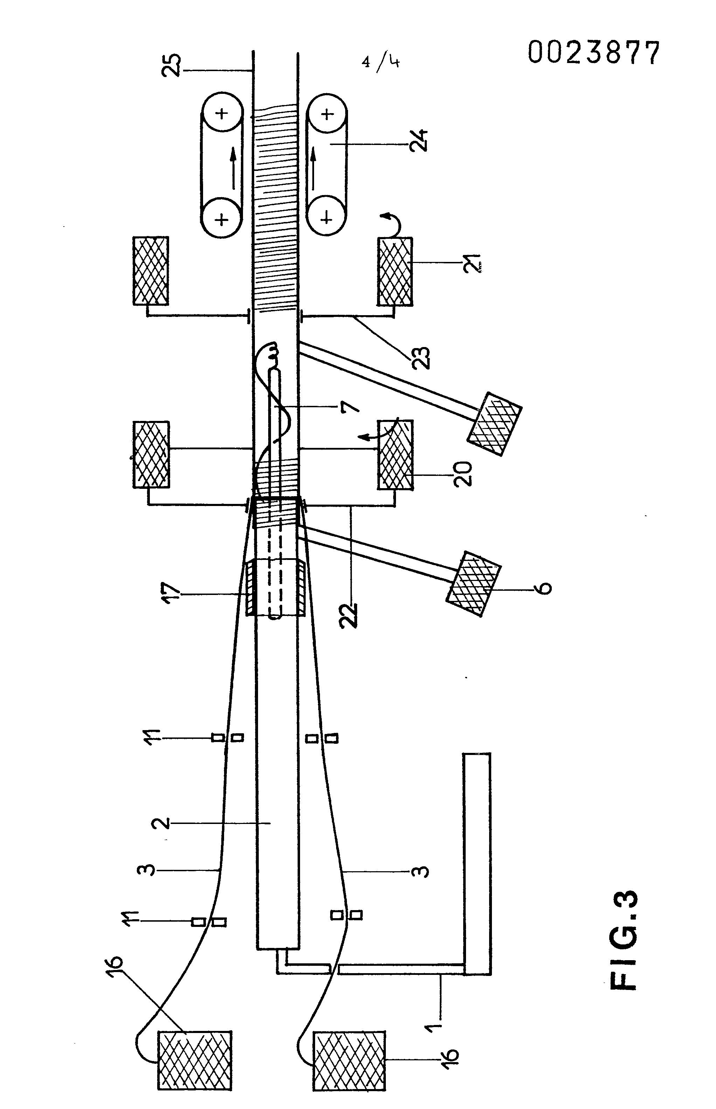

Les figures 3, 4 et 5 illustrent une variante du procédé selon l'invention, dans laquelle le tube est réalisé uniquement à partir d'éléments préimprégnés de résine, sans avoir à utiliser d'extrudeuse. Dans ce mode de réalisation, les éléments longitudinaux 3 sont de préférence constitués par des fils 16, par exemple de verre, ces fils étant répartis régulièrement autour de la périphérie du mandrin 2, au moyen de répartiteurs 11 comme précédemment. Ces répartiteurs 11 sont avantageusement constitués par une couronne comportant des oeillets de guidage pour chaque fil. Comme précédemment, la couche longitudinale de fils préimprégnés 3 de résine est entourée, avant qu'elle ne quitte la surface du mandrin 2, d'au moins une couche hélicoïdale de matière textile 6 également préimprégnée de résine.

D'autres couches de renfort, tant longitudinales qu'hélicoïdales 20-21 peuvent également être rapportées sur le tube formé au moyen de plateaux 22-23 rotatifs autour de l'axe longitudinal du tube, le dépôt des couches successives se faisant de préférence en sens inverse les unes des autres.

Le tube formé 25 est tracté grâce à une tireuse classique 24.

Un tel mode de réalisation, ainsi que cela est illustré plus particulièrement par les figures 4 te 5 permet de réaliser facilement des tulipes sur la longueur du tube. Pour cela, l'extrémité du mandrin 2 est équipée d'une portion cylindrique 17 montée coulissante sur ledit mandrin. Les déplacements de ce coulisseau 17 peuvent être provoqués par un vérin 18. Le diamètre intérieur du coulisseau 17 correspond sensiblement au diamètre extérieur du mandrin 2 et son diamètre extérieur au diamètre interne de la tulipe que l'on désire former. Grâce à un tel dispositif, lorsque l'on désire fabriquer une tulipe, on déplace selon une loi prédéterminée le coulisseau 17 et les éléments longitudinaux 3 formant le tube sont répartis à la périphérie de ce coulisseau, un enroulement hélicoïdal de fil préimprégné 6 étant également réalisé comme précédemment. On réalise ainsi une portion de tube de diamètre supérieur au diamètre normal, diamètre que l'on peut retrouver pratiquement instantanément en ramenant en arrière le coulisseau 18.

### Exemple 1

On réalise une installation du type illustré par les figures 1 et 2, ayant les caractéristiques suivantes :

- mandrin 2 : diamètre 75 mm, longueur L : 60 cm,

- lampe à rayonnement ultra-violet 7 : lampe Philips, type HTQ 7, de 2000 watts et de 700 mm de longueur.

On recouvre le mandrin de bandes 3 d'un film de polyester commercialisé par E.I. DU PONT DE NEMOURS sous la marque MYLAR, de 50 microns d'épaisseur et qui forme une gaine continue autour dudit mandrin. Lesdites bandes peuvent éventuellement être soudées bord à bord de manière à bien épouser la surface du mandrin 2.

Autour de la gaine ainsi formée, on dépose une couche de résine 12, commercialisée sous la marque ATLAC de la Société ATLAS CHEMICAL c'est-à-dire une résine à base de polyester contenant un sensibilisateur aux rayons ultra-violets.

Comme sensibilisateur, on utilisera avantageusement celui commercialié par la Société A.K.Z.O. sous la marque TRIGONAL P.1..

L'épaisseur de la résine déposée est calibrée à 0,5 mm. A la sortie de l'extrudeuse 4 et avant que le tube formé ne quitte la surface du mandrin 2, on enroule une couche de fils de verre 13 de 4 720 tex préimprégnés de la même résine à un taux de 26 %.

Eventuellement, entre la sortie de l'extrudeuse 4 et

- 13 -

0023877

l'enroulement des fils 13, on peut déposer autour de la couche de résine 12 une nappe 6 de fibres de verre pesant 50 grammes par mètre carré, ayant une largeur de 100 mm et qui évite l'écoulement de la résine et renforce également le tube formé.

L'ensemble ainsi réalisé est soumis, dès qu'il quitte le mandrin support, à l'action du rayonnement ultra-violet de la lampe 7 et la couche de résine est polymérisée et durcie depuis sa surface interne sur au moins une partie de son épaisseur et ce, de manière pratiquement instantanée. On obtient ainsi un tube de 75 mm de diamètre interne dont les parois ont une épaisseur d'environ 1,5 mm. Ce tube présente une très bonne résistance et peut être associé, en continu, à des couches classiques de renforcement, soit hélicoïdales, soit longitudinales, également préimprégnées ou non de résine, ces couches étant polymérisées et durcies de manière classique par passage dans des fours (non représentés sur les schémas), agissant alors depuis l'extérieur du tube en formation.

Exemple 2

Sur une installation similaire à celle illustrée par la figure 3, c'est-à-dire, qui par rapport à l'exemple précédent ne comporte pas d'extrudeuse 4 permettant de déposer de la résine autour du mandrin 2 et dans laquelle la lampe à rayonnement ultra-violet 7 est simplement fixée à proximité dudit mandrin 2 sans être entourée par une partie 14 légèrement compressible, on réalise un tube en amenant 24 éléments longitudinaux 3 préimprégnés de résine polyester et qui sont constitués de fils de verre de 4 720 tex, le taux d'imprégnation de résine étant de 26 %.

Ces éléments longitudinaux 3 sont amenés autour de la périphérie du mandrin 2 côte à côte et avant qu'ils ne quittent ledit mandrin, ils sont entourés au moyen d'une couche de fils de verre (roving) ayant un titre de 1 200 tex, préimprégnés également de résine polyester à un taux de 16 %.

L'ensemble ainsi formé est alors soumis, à la sortie du tube, à un traitement interne d'irradiation au moyen d'une lampe à rayonnement ultra-violet, ayant les mêmes caractéristiques qu'à l'exemple précédent.

On obtient un tube ayant les caractéristiques suivantes :

- diamètre interne : 75 millimètres,
- épaisseur : 0,8 millimètre.

Ce tube peut être, en continu, également associé à des couches de matière textile préimprégnées de résine puis est polymérisé par passage dans des fours conventionnels.

Exemple 3

On répète l'exemple 2 mais à l'aide du coulisseau 17 prévu sur le mandrin 2, coulisseau que l'on déplace périodiquement, on forme des tulipes ayant un diamètre de 80 millimètres et une longueur de 15 centimètres.

Les exemples qui précèdent montrent bien les avantages apportés par l'invention, et notamment le fait qu'elle permet de réaliser en continu, sans mandrin support faisant partie du tube formé, donc sans opération ultérieure d'enlèvement du mandrin, des tubes de longueur pratiquemnt illimitée et ce à grande vitesse, puisqu'il est possible grâce au traitement interne d'irradiation de travailler jusqu'à 5 mètres par minute ou plus.

Bien entendu, si on le désire, il est possible de couper les tubes à une longueur précise à la sortie de l'installation.

La grande vitesse de production du procédé selon l'invention est rendue possible par le fait que, pratiquement dès la sortie du mandrin conformateur, on réalise une surface interne résistante qui, en quelque sorte, sert de mandrin support pour le dépôt et le maintien des autres couches déposées ultérieurement dans le cycle de formation.

Il est évident que l'invention n'est pas limitée aux modes de réalisation décrits précédemment, mais qu'elle en couvre également toutes les variantes réalisées dans le même esprit.

Ainsi, il pourrait être envisagé d'utiliser comme éléments longitudinaux préimprégnés de résine, non pas des fils préimprégnés ou des bandes de film sur lesquels on dépose la résine, mais par exemple, une gaine textile, tissu ou tricot, également préimprégnée.

Par ailleurs, si dans la présente description, le traitement de durcissement est réalisé par l'intermédiaire d'une lampe à rayonnements ultra-violets, il est évident que l'on pourrait utiliser tout moyen équivalent permettant un durcissement rapide de la résine, tels que par exemple, un chauffage par haute fréquence ou ultra-haute fréquence, voire même éventuellement un chauffage par faisceau d'électrons.

0023877

REVENDICATIONS

1/ Procédé pour la réalisation en continu, sans arrêt ni temps mort, d'un tube à base de résine thermodurcissable renforcée par une structure textile, qui consiste :

- à déposer sur un mandrin conformateur une couche de résine,

- à faire avancer ladite résine vers l'extrémité libre du mandrin,

- puis à soumettre la surface interne du tube formé à un traitement d'irradiation immédiatement à proximité de l'extrémité du mandrin,

caractérisé par le fait :

- que la couche de résine est déposée sur le mandrin au moyen d'éléments longitudinaux répartis régulièrement à la périphérie dudit mandrin,

- que l'on dépose hélicoïdalement autour desdits éléments longitudinaux supportant la résine, avant qu'ils ne quittent le mandrin, au moins une couche de matière textile préimprégnée d'une résine similaire à la précédente,

- et que le traitement d'irradiation provoque un durcissement pratiquement instantané, dès la sortie du mandrin, d'au moins une partie de l'épaisseur de la couche de résine.

2/ Procédé selon la revendication 1, caractérisé par le fait que le traitement interne d'irradiation est réalisé au moyen d'une source à rayonnement ultra-violet disposée à l'extrémité du mandrin.

3/ Procédé selon l'une des revendications 1 et 2, caractérisé par le fait que les éléments longitudinaux permettant le dépôt de la résine à la périphérie du mandrin sont constitués par des fils préalablement préimprégnés de résine.

4/ Procédé selon l'une des revendications 1 à 3, caractérisé par le fait que la résine est déposée sur le mandrin au moyen d'une extrudeuse, les éléments longitudinaux étant amenés à la périphérie du mandrin au travers de l'extrudeuse et le dépôt de la résine se faisant sur ces éléments.

0023877

5/ Procédé selon la revendication 4, caractérisé par le fait que les éléments longitudinaux sont des bandes d'un film perméable aux radiations ultra-violettes, ces bandes recouvrant le mandrin et formant une gaine autour de lui.

6/ Procédé selon l'une des revendications 1 à 5, caractérisé par le fait que l'on fait varier périodiquement la section du mandrin autour duquel est déposée la résine, de manière à réaliser des variations dans la section du tube formé.

7/ Dispositif pour la mise en oeuvre du procédé selon l'une des revendications 1 à 6, caractérisé par le fait qu'il est constitué essentiellement par un bâti support fixe (1) sur lequel est monté horizontalement, de manière fixe, un mandrin conformateur (2) lisse dont la section transversale correspond à la section interne du tube à réaliser, de faible longueur et auquel sont associés :

- des moyens permettant de répartir régulièrement à la périphérie du mandrin (2) une pluralité d'éléments longitudinaux (3) supportant une résine thermodurcissable;

- des moyens (6) permettant de déposer hélicoïdalement autour desdits éléments longitudinaux (3), avant qu'ils ne quittent le mandrin (2), au moins une couche de matière textile préimprégnée de résine,

- des moyens (7) de traitement interne par irradiation disposés sensiblement selon l'axe dudit mandrin (2) et provoquant le durcissement pratiquement instantané de la résine à partir de sa surface interne et ce sur au moins une partie de son épaisseur.

8/ Dispositif selon la revendication 7, caractérisé par le fait qu'il comporte également des moyens annexes permettant de déposer des couches de renforcement complémentaires (8), (9), ainsi que des moyens permettant de tracter le tube formé.

9/ Dispositif selon l'une des revendications 7 et 8, caractérisé par le fait que les moyens de traitement interne par irradiation sont constitués d'une lampe à rayonnement ultra-violet (7), maintenue par le mandrin (2) et disposée sensiblement suivant son axe dans son prolongement.

10/ Dispositif selon la revendication 9, caractérisé par le fait que l'extrémité du mandrin (2) est prolongée par une partie légèrement compressible (14), disposée autour de la lampe à rayonnement ultra-violet (7) et réalisée de manière à permettre une irradiation totale de la surface interne du tube formé.

11/ Dispositif selon l'une des revendications 7 à 10, caractérisé par le fait que la résine est déposée sur les éléments longitudinaux (3) répartis à la périphérie du mandrin (2) au moyen d'une extrudeuse conventionnelle (4).

12/ Dispositif selon l'une des revendications 7 à 11, caractérisé par le fait que le mandrin support (2) comporte un coulisseau (17) déplaçable périodiquement sur sa longueur et sur lequel sont disposés, selon une fréquence déterminée, les éléments longitudinaux (3) supportant la résine de manière à former une portion du tube de diamètre supérieur au diamètre normal.

1/4

**FIG.1**

**FIG.2**

FIG.5

FIG.4

FIG.3

0023877

Office européen
des brevets

**RAPPORT DE RECHERCHE EUROPEENNE**

EP 0023877

## DOCUMENTS CONSIDERES COMME PERTINENTS

| Catégorie | Citation du document avec indication, en cas de besoin, des parties pertinentes | Revendication concernée |
|---|---|---|
| D | FR - A - 1 277 683 (WESTERN PLASTICS CORP.) <br> * En entier * | 1,2,7 9 |
| A | GB - A - 1 291 729 (SECRETARY OF STATE FOR DEFENSE) | |
| AD | FR - A - 2 206 182 (KURAY) | |
| AD | CH - A - 578 415 (CIBA-GEIGY) | |

**CLASSEMENT DE LA DEMANDE (Int. Cl. 3)**

B 29 D 23/05
B 29 D 23/00
B 29 F 3/00

**DOMAINES TECHNIQUES RECHERCHES (Int. Cl. 3)**

B 29 D 23/05
B 29 F 3/00
3/10

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-11-1980 | VAN BELLEGHEM |

OEB Form 1503.1  06.78